# EUROPEAN PATENT APPLICATION

(11) **EP 4 573 902 A1**
(43) Date of publication of application: **25.06.2025**
(21) Application number: 23854839.0
(22) Date of filing: 09.08.2023
(51) Int. Cl.: A01N 35/06, A01P 21/00, A01N 65/48, A01G 22/22, A01G 7/06

(54) **QUALITY IMPROVING AGENT AND QUALITY IMPROVING METHOD FOR BROWN RICE**

(30) Priority: 18.08.2022 JP 2022130643; 14.12.2022 JP 2022199099
(71) Applicant: Ishihara Sangyo Kaisha, Ltd., Osaka-shi, Osaka 550-0002 (JP)
(72) Inventor: SUGANUMA Taketo, Osaka-shi, Osaka 550-0002 (JP); MUKAI Chitoshi, Osaka-shi, Osaka 550-0002 (JP); IZAKURA Kenji, Osaka-shi, Osaka 550-0002 (JP); KOBAYASHI Yousuke, Osaka-shi, Osaka 550-0002 (JP)
(74) Representative: Müller-Boré & Partner Patentanwälte PartG mbB
(86) International application number: PCT/JP2023/029032
(87) International publication number: WO 2024/038805

(57) **Abstract**

To provide a brown rice quality improving agent and a method for improving quality of brown rice, with which brown rice with high quality can be provided.

The brown rice quality improving agent of the present invention contains zerumbone as an active ingredient. The method for improving quality of brown rice of the present invention has a step of applying zerumbone to rice plants in the cultivation period.

## Description

### TECHNICAL FIELD

The present invention relates to a brown rice quality improving agent, and a method for improving quality of brown rice, to be applied to rice plants to produce brown rice with high quality.

### BACKGROUND ART

In recent years, by temperature rise during the ripening period of rice plants deterioration in quality of the appearance of brown rice (high-temperature damage in the ripening period) occurs frequently and becomes problematic. The temperature rise may be caused by global warming and is a problem to be solved continuously in future.

Chalkiness of brown rice is one of main symptoms of the high-temperature damage in the ripening period. Chalkiness of brown rice not only lowers the inspection grade but may deteriorate the taste, etc., and various studies have been conducted to prevent grain chalkiness.

As an example of such studies, a method of applying a specific component to rice plants thereby to reduce high-temperature damage and improve the quality of brown rice, has been proposed (for example, Patent Documents 1 and 2).

However, it has not been known that zerumbone has an effect to improve quality of brown rice.

By the way, zerumbone, which is an active ingredient in the quality improving agent of the present invention, is known to be utilized as a plant growth improving agent (Patent Document 3).

Specifically, Patent Document 3 discloses that zerumbone or its analogue or a salt thereof, has effects to relax the environmental stress of plants, to promote plant growth, and to improve the quality of plants, and is suitable for application as a plant growth improving agent.

However, the concept of "plants" covers a very wide range compared to "animals", and their variety is enormous. And, different kinds of plants have different habitats and influences by changes of the habitats, and are different in specific quality required.

Specifically, Patent Document 3 describes in verification test that "high quality leaf lettuce was obtained with high growth speed and without physiological disorder and diseases", however, except for this description, Patent Document 3 mainly describes growth promotion effects, such as an increase of the weight and an increase of the area of leaves.

However, occurrence of grain chalkiness of brown rice is a problem peculiar to rice plants relating to specific habitats in a specific growth stage, that is high-temperature damage in the ripening period, and cannot be considered in the same way as totally different varieties of plants, such as leaf lettuce. Further, occurrence of grain chalkiness is clearly independent of growth promotion such as an increase of the weight and an increase of the area of leaves, and it is difficult to confirm or predict occurrence of grain chalkiness before harvest.

Thus, technical idea that quality of brown rice is improved by applying zerumbone in the rice plants cultivation period, cannot be considered as disclosed in Patent Document 3.

### PRIOR ART DOCUMENTS

### PATENT DOCUMENTS

Patent Document 1: JP-A-2015-129104
Patent Document 2: JP-A-2016-17070
Patent Document 3: JP-A-2016-145159

### DISCLOSURE OF INVENTION

### TECHNICAL PROBLEM

The object of the present invention is to provide a brown rice quality improving agent and a method for improving quality of brown rice, by which brown rice with high quality can be produced.

### SOLUTION TO PROBLEM

The present inventors have conductive extensive studies to achieve the above object and as a result, found that brown rice with high quality can be produced by applying zerumbone to rice plants in the cultivation period, and accomplished the present invention.

That is, the present invention relates to a brown rice quality improving agent and a method for improving quality of brown rice according to the following embodiments.

[1] A brown rice quality improving agent comprising zerumbone as an active ingredient.
[2] The brown rice quality improving agent according to [1], which is a squeeze, an extract or a ground product of wild ginger containing zerumbone as an active ingredient, or which contains at least one of them.
[3] The brown rice quality improving agent according to [2], which is a squeeze or an extract of wild ginger containing zerumbone as an active ingredient, or which contains at least one of them.
[4] The brown rice quality improving agent according to [3], which is in the form of a soluble concentrate, an emulsifiable concentrate or a suspoemulsion.
[5] The brown rice quality improving agent according to [2], which is a ground product of wild ginger containing zerumbone as an active ingredient, or which contains the ground product.
[6] The brown rice quality improving agent according to [5], which is in the form of dust, granules, microgranules, a wettable powder, water dispersible granules, a flowable or diffusible granules.
[7] A method for improving quality of brown rice, which has a step of applying zerumbone to rice plants in the cultivation period.
[8] The method for improving quality of brown rice according to [7], wherein at least one member selected from a squeeze, an extract and a ground product of wild ginger containing zerumbone as an active ingredient is applied to rice plants.
[9] The method for improving quality of brown rice according to [7] or [8],wherein zerumbone is applied to rice plants in the raising of seedling period.
[10] The method for improving quality of brown rice according to [9], wherein zerumbone is applied in a period from the beginning of the rice plants greening stage to the day of transplanting.
[11] The method for improving quality of brown rice according to [7] or [8], wherein zerumbone is applied to rice plants after transplanting.
[12] The method for improving quality of brown rice according to [7] or [8], wherein zerumbone is applied to seeds before sowing.
[13] A method for improving quality of brown rice, which comprises a step of preparing a brown rice quality improving agent containing zerumbone as an active ingredient, and a step of applying the brown rice quality improving agent or a diluted product thereof to rice plants in the cultivation period.
[14] A method for formulating a brown rice quality improving agent comprising zerumbone as an active ingredient, which comprises a step of preparing a mixture of zerumbone with a liquid carrier or a solid carrier, and a step of mixing the mixture with a surfactant and other additive if required.
[15] A method for formulating a brown rice quality improving agent comprising zerumbone as an active ingredient, which comprises a step of preparing at least one member selected from a squeeze and an extract of wild ginger containing zerumbone as an active ingredient, and a step of mixing the mixture with a solvent, a surfactant or other additive if required to obtain a soluble concentrate, an emulsifiable concentrate or a suspoemulsion.
[16] A method for formulating a brown rice quality improving agent comprising zerumbone as an active ingredient, which comprises a step of preparing a ground product of wild ginger containing zerumbone as an active ingredient, and a step of mixing the mixture with a filler, a surfactant or other additive if required to obtain dust, granules, microgranules, a wettable powder, water dispersible granules, a flowable or diffusible granules.

### ADVANTAGEOUS EFFECTS OF INVENTION

According to the present invention, brown rice with high quality can be produced.

### DESCRIPTION OF EMBODIMENTS

Now, the brown rice quality improving agent (hereinafter sometimes referred to simply as "quality improving agent") and the method for improving quality of brown rice of the present invention will be described in detail. However, it should be understood that the present invention is by no means limited to such specific embodiments, and various changes and modifications are possible within a range not to depart from the scope of the invention.

In the present invention, the quality of brown rice is referred to Classification of Brown Rice, relating to the appearance, by Agricultural Products Standard Provision specified by Agricultural Products Inspection Act of Japan, Article 11. By the Agricultural Products Standard Provision, brown rice is classified based on the appearance into head grain, damaged kernel, dead kernel, colored kernel and immature grain.

In this specification, the above terms are used as terms having the following meanings, with reference to the Agricultural Products Standard Provision.

Head grain is grain excluding damaged kernel, dead kernel, colored kernel, immature grain, other grain and foreign matter.

Damaged kernel means grain which is damaged (germinated grain, diseased grain, sprouted grain, insect grain, cracking grain, cracked grain, brown colored grain, broken grain, etc.). In the case of forage brown rice, the damaged kernel means geminated grain, diseased grain and sprouted grain, excluding one to such an extent that the damage degree is mild and the quality of polished rice and the rice polishing ratio are not affected, excluding the cracking grain of brewing brown rice.

Dead kernel is grain which is not ripened and has chalky powder (green dead grain and white dead grain).

Colored kernel is grain which is entirely or partly colored, and red rice, excluding one to be removed by polishing and one to such an extent that the quality of polished rice and the rice polishing ratio are not significantly affected.

Immature grain is grain which is not ripened, excluding the dead kernel.

Other grains are grain of other varieties excluding the variety of brown rice (brown rice, for glutinous brown rice).

Foreign matter is matter other than grain.

In brown rice which suffers from high-temperature damage in the ripening period, the proportion of grain chalkiness which is white and opaque increase. The grain chalkiness is classified into "immature grain" among the above classification. Specifically, grain chalkiness is generic name of immature grain the albumen of which has a white and opaque portion, and depending upon the white and opaque portion, classified into milky white kernel, white-core kernel, white-belly kernel, white-back kernel, white-base kernel, etc.

Deterioration in quality by high temperature in the ripening period is highly related to the temperature for 20 days after heading, and it has been reported that occurrence of grain chalkiness increases when the average daily mean temperature for 20 days after heading exceeds 27°C.

The effect to improve the quality of brown rice of the present invention is confirmed when the proportion of head grain increases e.g. by reduction of the proportion of grain chalkiness, by application of the present invention, as compared with a case where the present invention is not applied.

The proportions of head grain and immature grain may be measured by a commercial rice analyzer, for example, by Rice Analyzer "RGQI 20A" or "RGQI 100B", manufactured by SATAKE CORPORATION.

Zerumbone is a 11-membered cyclic sesquiterpene, is known as a natural product contained in the rhizome of wild ginger (Zingiber zerumbet Smith) with high content, and is the main component in the wild ginger essential oil. The chemical name of zerumbone is (2E,6E,10E)-2,6,9,9-tetramethyl-2,6,10-cycloundecatrien-1-one.

As zerumbone contained as an active ingredient in the quality improving agent of the present invention, zerumbone contained in wild ginger may be used.

Specifically, for example, a squeeze, an extract or a ground product of wild ginger may be utilized as it is as an active ingredient, two or more of them may be mixed, or one or more of them after diluted, concentrated, purified or subjected to other appropriate treatment, may be used.

In a case where zerumbone is obtained in the form of a squeeze, an extract or a ground product of wild ginger, the part of wild ginger used as a material is not particularly limited, however, rhizome containing zerumbone with high content is preferably used.

As a squeezing method, a squeezer such as a pulp finisher may be used. For example, wild ginger is washed, blanched and drained, crushed if desired, and squeezed by a squeezer.

As an extraction method, a known method such as solvent extraction or steam distillation may be employed.

As an extraction solvent, any solvent with which zerumbone is extracted may be used, and a solvent such as water, an alcohol, an ether, a ketone, an ester, an amide, an aliphatic hydrocarbon or an aromatic hydrocarbon may be mentioned. Such extraction solvents may be used alone or as a mixture of two or more, however, considering the safety and environmental burden, one or a mixture of two or more of lower alcohols and water is preferably used.

In a case where a ground product of wild ginger is utilized, the particle size is not particularly limited, however, one having a median diameter (D50) in a volume-based particle size distribution measured by laser diffraction/scattering method of from 1 to 1000 µm may be used. As a measurement apparatus, for example, Microtrac particle size analyzer "MT3300EXII" (manufactured by NIKKISO CO., LTD.) may be used.

The formulation type of the quality improving agent of the present invention is not particularly limited, and any formulation type commonly employed in the agricultural field may be employed.

Specifically, zerumbone may be mixed with a solid carrier or a liquid carrier and if required, a surfactant and other additive and applied in the form of various formulations such as dust, granules, microgranules, a wettable powder, water dispersible granules, a flowable, a suspoemulsion, an oil-based suspension concentrate (OD), wettable tablets, a water soluble powder, water soluble granules, water-soluble tablets, a gel water soluble powder, an emulsifiable concentrate, a soluble concentrate, an oil miscible liquid, a water surface spreading formulation, an aerosol, microcapsules, a paste, a coating agent, a smoking agent, a fumigant, ultra low-volume formulations, or diffusible granules (such as Jumbo, MAMETSUBU (registered trademark), Rakuryu (registered trademark) or floating granules (FG agent)). Any usual formulation used in this field may be employed, so long as the object of the present invention is thereby met.

A wild ginger squeeze containing zerumbone as an active ingredient may be used as it is as the quality improving agent, but if desired, may be mixed with a solvent, a surfactant or other additive. The formulation type may be a liquid formulation such as a soluble concentrate, an emulsifiable concentrate or a suspoemulsion.

A wild ginger extract containing zerumbone as an active ingredient may be used as it is as the quality improving agent, but if desired, may be mixed with a solvent, a surfactant or other additive. The formulation type may be a liquid formulation such as a soluble concentrate, an emulsifiable concentrate or a suspoemulsion. Particularly when used as diluted with water, it is preferred that the active ingredient is dissolved or uniformly dispersed, to exhibit performance, and such a formulation type is suitably a soluble concentrate.

The solvent is selected considering miscibility with the extraction solvent, and considering the safety and environmental burden, water or a lower alcohol is preferred, and ethanol is preferred as the lower alcohol.

A wild ginger ground product containing zerumbone as an active ingredient may be used as it is as the quality improving agent, but if desired, may be mixed with a filler, a surfactant or other additive. The formulation type may, for example, be dust, granules, microgranules, water dispersible granules, a wettable powder, a flowable, or diffusible granules (such as Jumbo, MAMETSUBU (registered trademark), Rakuryu (registered trademark) or floating granules (FG agent)).

In the present invention, in application of zerumbone to rice plants in the cultivation period, the dose can not generally be defined as it varies depending upon the weather conditions, the soil conditions, the types of formulations, the application timing, etc., but it is as follows for example.

In the case of seed treatment, the amount of zerumbone is, for example, per 500 g of dry unhulled rice, preferably from 0.1 mg to 10 mg, more preferably from 0.25 mg to 5 mg, particularly preferably from 0.5 mg to 5 mg.

In the case of nursery box application, the amount of zerumbone is, for example, per nursery box (inside dimensions: length 580 mm × width 280 mm × depth 28-30 mm), preferably from 0.1 mg to 15 mg, more preferably from 0.2 mg to 10 mg, particularly preferably from 0.25 mg to 5 mg.

In the case of application after transplanting (for example, spreading over a flooded or drained paddy filed), the amount of zerumbone is, for example, preferably from 25 mg to 2000 mg, more preferably from 50 mg to 1000 mg, per 10 are. Since a quality improving effect is confirmed by such a small amount of zerumbone, as described above, it is possible to set the concentration of zerumbone as an active ingredient to be low as compared with the active ingredient concentration in a conventional agricultural formulation. For example, in Test Examples 2 and 3 described later, in water application using a soluble concentrate, a sufficient quality improving effect is obtained by spreading at a very low concentration of about 0.5 to 10 ppm as the concentration after dilution with water.

In a case where a wild ginger ground product containing zerumbone as an active ingredient is used, the amount of the ground product used and the concentration of zerumbone in the ground product may properly be set and adjusted so that the amount of zerumbone will be within the above preferred range, while the zerumbone content in the ground product is considered.

Rice plants to which the present invention is applicable are not particularly limited, and may be any rice plants of which the quality may be deteriorated e.g. by occurrence of grain chalkiness.

The variety of rice plants is also not particularly limited. Transgenic plants generated by gene recombination or gene editing are included. For example, rice plants having imparted resistance to environmental stress, resistance to herbicides, resistance to pests and resistance to phytopathogen, and rice plants having growth, fertility, quality or yield of crops modified, are included. Further, stacked cultivars in which these multiple useful traits are combined, are also included.

In the present invention, in application of zerumbone to rice plants in the cultivation period, the application timing is not particularly limited, and zerumbone may be applied in any growth stage of the vegetative period, the reproductive period and the ripening period, and may be applied several times over different growth stages.

With respect to the application timing, unexpectedly, the quality improving effect is confirmed not only by application after transplanting into the paddy field but also by seed treatment or by application in the raising of seedling period before transplanting (Test Examples 1, 6, 7, 8, 9 and 10). Since occurrence of grain chalkiness is considered to be caused by high-temperature damage in the ripening period, it is an unexpected effect found for the first time by actual verification that the activity of zerumbone lasts and the quality improving effect is obtained even by application in the stage well before the ripening period, that is application to seeds or application in the raising of seedling period.

In a case where the seed treatment is conducted at the timing of seed soaking, the seed soaking is carried out preferably from the seed soaking start date to the sowing day, more preferably from 7 days before sowing to the day before sowing, particularly preferably from 3 days before sowing to the day before sowing.

In the case of application in the raising of seedling period, application is carried out preferably from after sowing to the day of transplanting, more preferably from the emergence stage to the day before transplanting, particularly preferably from beginning of the greening stage to the day before transplanting. In the case of application from several days before transplanting to the day before transplanting, it is carried out preferably from 7 days before transplanting to the day before transplanting. More specifically, application at the beginning of the greening stage, application 7 days before transplanting, application 3 days before transplanting, application the day before transplanting may, for example, be mentioned.

Here, the greening stage means the timing when seedlings are acclimatized to light, and when white buds (leaf sheath) that sprouted from unhulled rice split, sharp green buds appear from inside of the white buds, and the tips of the green buds unfold and the leaf emergence begin to develop.

In the case of application after transplanting, it is carried out preferably from after transplanting to the heading stage, more preferably from 45 to 35 days before heading to the heading stage, particularly preferably from the panicle initiation stage to the heading stage.

In the present invention, in application of zerumbone to rice plants in the cultivation period, the application method is not particularly limited, and a conventional application method such as seed treatment, foliar application, soil application, water application, application to a drained paddy field, or nursery box application (foliar application, irrigation application, seed soaking application or pool raising seedling) may be employed. The application include not only direct application to the whole or a part of the rice plants (stem and leaves, ears, roots, seeds, etc.) but also application to the environment where rice plants are grown.

The seed treatment is not particularly limited so long as seeds before sowing are treated with zerumbone, and various methods such as seed soaking application, dressing application and smear application may be employed. Further, the application timing is also not particularly limited and may be any of before seed soaking, at the timing of seed soaking and after seed soaking. The application at the timing of seed soaking (soaking application) may be carried out by conducting seed soaking in an aqueous solution containing zerumbone instead of water.

In the raising of seedling period, it is preferred to let zerumbone be absorbed from the stem and leaves or from the roots by nursery box application. Not only in the case of irrigation application and soaking application but also in the case of foliar application, a certain amount of a liquid that had run down onto the soil is absorbed from the roots.

Further, after transplanting, it is preferred to spread zerumbone over a flooded or drained paddy field to let zerumbone be absorbed from the stem and leaves or from the roots. Specifically, foliar application over a flooded or drained paddy field; water application over the whole area of a flooded or drained paddy field; water periphery application over peripheries along ridges of a flooded paddy field; and air spreading over a flooded or drained paddy field from the air by an automatic flying object, may, for example, be mentioned. Spreading may be carried out by a conventional spreading apparatus such as a boom sprayer, a power sprayer, a manual or automatic helicopter, or a drone. Further, spreading may be carried out manually, without using an apparatus.

In the above, explanation is made mainly with reference to transplanting, however, in application of zerumbone to rice plants in the cultivation period, the rice plants cultivation method is not particularly limited, and either direct seeding or transplanting may be employed, and zerumbone may be applied to either a well-drained paddy filed or a flooded paddy field. For example, in the case of application of zerumbone in direct seeding, many options are considered and may be properly combined, for example in the case of direct seeding on a well-drained paddy filed, a method of smearing zerumbone in combination with a seed treatment ingredient and a method of applying zerumbone in transplanted fields, and in the case of direct seeding on a flooded paddy field, a method of applying zerumbone at the timing of seed soaking, a method of using zerumbone in combination with a coating agent (iron, calper (calcium peroxide), rouge and molybdenum compound or the like), and a method of spreading zerumbone in transplanted fields.

In the present invention, in application of zerumbone to rice plants in the cultivation period, zerumbone may be used in combination with other component such as a herbicide, an insecticide, a fungicide, a plant growth regulator, a safener, a fertilizer, a soil improving agent or an agricultural material. As the way of combination, zerumbone and other component may be separately formulated and mixed at the timing of application, or they may be formulated together. Further, they are not necessarily applied at one time, and they may be used dividedly several times or they may be used at different times.

### EXAMPLES

Now, the brown rice quality improving agent and the method for improving quality of brown rice of the present invention will be described in further detail with reference to Test Examples and Formulation Examples. However, it should be understood that the present invention is by no means restricted to such specific Examples.

In the following Test Examples 4, 5, 10 and 11, as a wild ginger ground product, a wild ginger ground product ground to a particle size of about several tens µm to several hundreds µm was used.

### Test Example 1

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, and paddy rice seeds (variety: Koshihikari, Kinuhikari or Hitomebore) were sown. It was grown in conventional cultivation, and three days before transplanting or on the day before transplanting, a solution of the zerumbone-containing soluble concentrate diluted 500-fold with water was applied with a pressure sprayer in an amount of 500 mL per nursery box (inside dimensions: length 580 mm × width 280 mm × depth 29 mm, and the same applies to the other Test Examples) for foliar application. Further, for comparison, using water containing no active ingredient, it was grown in the same cultivation method (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 20A) manufactured by SATAKE CORPORATION to calculate the proportion of the number of grains of each discrimination item (head grain, damaged kernel, etc.) per 1000 grains of the polished brown rice. The results are shown in Tables 1 to 3.

In this Test, the average temperature in the ripening period for 20 days after heading was such that the highest temperature (average daily highest temperature for 20 days): 35.2°C, the lowest temperature (average daily lowest temperature for 20 days): 25.1°C and the average temperature (average daily mean temperature for 20 days): 29.1°C, and such was a condition under which high-temperature damage in the ripening period might occur.

**Table 1**

| Koshihikari: | | | | | | |
|---|---|---|---|---|---|---|
| | | Measured Value | | | Relative to untreated plot (%) | |
| | | Timing of application of zerumbone-containing soluble concentrate | | Untreated plot | Timing of application of zerumbone-containing soluble concentrate | |
| | | 3 Days before transplanting | Day before transplanting | | 3 Days before transplanting | Day before transplanting |
| Head grains (%) | | 43.1 | 43.1 | 36.6 | 118 | 118 |
| Damaged kernels (%) | | 19.8 | 21.9 | 23.3 | 85 | 94 |
| Dead kernels (%) | | 0.8 | 0.7 | 0.9 | 89 | 78 |
| Colored kernels (%) | | 0.1 | 0.1 | 0.1 | 100 | 100 |
| Immature grains (%) | | 36.3 | 34.3 | 39.2 | 93 | 88 |
| Details of immature grain | Milky white kernels (%) | 4.3 | 4.0 | 4.6 | 93 | 87 |
| | White-based kernels (%) | 10.5 | 10.5 | 15.6 | 67 | 67 |
| | White-belly kernels % | 1.0 | 1.2 | 1.7 | 59 | 71 |
| | Green immature grains (%) | 1.7 | 1.3 | 0.6 | 283 | 217 |
| | Other immature grains (%) | 18.8 | 17.3 | 16.6 | 113 | 104 |
| Grain chalkiness (%) | | 15.8 | 15.7 | 21.9 | 72 | 72 |

| | | | | | | |
|---|---|---|---|---|---|---|
| grain chalkiness: milky white kernels + white-based kernels + white-belly kernels | | | | | | |

**Table 2**

| Kinuhikari: | | | | | | |
|---|---|---|---|---|---|---|
| | | Measured Value | | | Relative to untreated plot (%) | |
| | | Timing of application of zerumbone-containing soluble concentrate | | Untreated plot | Timing of application of zerumbone-containing soluble concentrate | |
| | | 3 Days before transplanting | Day before transplanting | | 3 Days before transplanting | Day before transplanting |
| Head grains (%) | | 25.6 | 25.6 | 19.3 | 133 | 133 |
| Damaged kernels (%) | | 26.2 | 27.3 | 25.7 | 102 | 106 |
| Dead kernels (%) | | 1.9 | 1.4 | 2.8 | 68 | 50 |
| Colored kernels (%) | | 0.1 | 0.1 | 0.1 | 100 | 100 |
| Immature grain (%) | | 46.3 | 45.6 | 52.2 | 89 | 87 |
| Details of immature grain | Milky white kernels (%) | 8.7 | 8.3 | 11.5 | 76 | 72 |
| | White-based kernels (%) | 14.8 | 13.4 | 16.6 | 89 | 81 |
| | White-belly kernels (%) | 4.8 | 4.9 | 7.0 | 69 | 70 |
| | Green immature grains (%) | 0.5 | 0.9 | 0.2 | 250 | 450 |
| | Other immature grains (%) | 17.5 | 18.1 | 16.9 | 104 | 107 |
| Grain chalkiness (%) | | 28.3 | 26.6 | 35.1 | 81 | 76 |

| | | | | | | |
|---|---|---|---|---|---|---|
| grain chalkiness: milky white kernels +white-based kernels+white-belly kernels | | | | | | |

**Table 3**

| Hitomebore: | | | | | | |
|---|---|---|---|---|---|---|
| | | Measured Value | | | Relative to untreated plot (%) | |
| | | Timing of application of zerumbone-containing soluble concentrate | | Untreated plot | Timing of application of zerumbone-containing soluble concentrate | |
| | | 3 Days before transplanting | Day before transplanting | | 3 Days before transplanting | Day before transplanting |
| Head grains (%) | | 51.4 | 48.5 | 37.8 | 136 | 128 |
| Damaged kernels (%) | | 28.0 | 30.8 | 37.5 | 75 | 82 |
| Dead kernels (%) | | 0.3 | 0.4 | 0.4 | 75 | 100 |
| Colored kernels (%) | | 0.1 | 0.1 | 0.1 | 100 | 100 |
| Immature grain (%) | | 20.3 | 20.2 | 24.2 | 84 | 83 |
| Details of immature grain | Milky white kernels (%) | 1.9 | 2.1 | 3.3 | 58 | 64 |
| | White-based kernels (%) | 2.9 | 3.1 | 4.4 | 66 | 70 |
| | White-belly kernels (%) | 1.0 | 1.0 | 1.6 | 63 | 63 |
| | Green immature grains (%) | 0.5 | 0.4 | 0.2 | 250 | 200 |
| | Other immature grains (%) | 14.0 | 13.6 | 14.8 | 95 | 92 |
| Grain chalkiness (%) | | 5.8 | 6.2 | 9.3 | 62 | 67 |

| | | | | | | |
|---|---|---|---|---|---|---|
| grain chalkiness: milky white kernels +white-based kernels+white-belly kernels | | | | | | |

As evident from Tables 1 to 3, by applying the solution of the zerumbone-containing soluble concentrate diluted with water for foliar application in the rice plants raising of seedling period, an effect to increase the proportion of head grain is confirmed for all the varieties as compared with the untreated plot, and an effect to suppress deterioration in quality of brown rice is confirmed. As the factor for the increase of the proportion of head grain, specifically, it is confirmed that the proportion of grain chalkiness which is particularly problematic under high temperature conditions in the ripening period is reduced as compared with the untreated plot, thus contributing to the increase of the proportion of head grain. Further, it is also confirmed that the proportions of damaged kernels, dead kernels, etc., in addition to grain chalkiness, are also reduced as compared with the untreated plot, thus contributing to the increase of the proportion of head grain.

### Test Example 2

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, paddy rice seeds (variety: Kinuhikari) were sown and grown conventionally, and seedlings were mechanically transplanted into a paddy field. In the booting stage (63 days after the transplanting, 11 days before heading) or in the heading stage (74 days after the transplanting), an aqueous solution having the zerumbone-containing soluble concentrate diluted 100-fold or 1000-fold with water in an amount corresponding to 100 L per 10 are, was applied by a pipette in water.

After the harvest, grain threshing, hulling and grade inspection by a rice grader were carried out, and the brown rice quality of the obtained polished brown rice was determined by grain discriminator (trade name: RGQI 20A) manufactured by SATAKE CORPORATION to calculate the proportion of the number of grains of each discrimination item (head grain, damaged kernel, etc.) per 1000 grains of the polished brown rice. The results are shown in Tables 4 and 5.

In this Test, the average temperature in the ripening period for 20 days after heading was such that the highest temperature (average daily highest temperature for 20 days): 33.4°C, the lowest temperature (average daily lowest temperature for 20 days): 25.2°C and the average temperature (average daily mean temperature for 20 days): 28.6°C, and such was a condition under which high-temperature damage in the ripening period might occur.

**Table 4**

| The booting stage: | | | | | | |
|---|---|---|---|---|---|---|
| | | Measured Value | | | Relative to untreated plot (%) | |
| | | Zerumbone-containing soluble concentrate | | Untreated plot | Zerumbone-containing soluble concentrate | |
| | | 1,000-fold dilution | 100-fold dilution | | 1,000-fold dilution | 100-fold dilution |
| Head grains (%) | | 65.3 | 65.3 | 59.8 | 109 | 109 |
| Damaged kernels (%) | | 1.8 | 2.0 | 2.5 | 72 | 80 |
| Dead kernels (%) | | 0.8 | 0.8 | 1.6 | 50 | 50 |
| Colored kernels (%) | | 0.1 | 0.1 | 0.4 | 25 | 25 |
| Immature grains (%) | | 31.9 | 31.7 | 35.6 | 90 | 89 |
| Details of immature grain | Milky white kernels (%) | 6.5 | 6.9 | 9.2 | 71 | 75 |
| | White-based kernels (%) | 6.9 | 6.8 | 8.8 | 78 | 77 |
| | White-belly kernels (%) | 0.8 | 0.8 | 1.4 | 57 | 57 |
| | Green immature grains (%) | 1.7 | 1.4 | 0.9 | 189 | 156 |
| | Other immature grains (%) | 16.1 | 15.9 | 15.3 | 105 | 104 |
| Grain chalkiness (%) | | 14.2 | 14.5 | 19.4 | 73 | 75 |

| | | | | | | |
|---|---|---|---|---|---|---|
| grain chalkiness: milky white kernels +white-based kernels+white-belly kernels | | | | | | |

**Table 5**

| The heading stage: | | | | | | |
|---|---|---|---|---|---|---|
| | | Measured Value | | | Relative to untreated plot (%) | |
| | | Zerumbone-containing soluble concentrate | | Untreated plot | Zerumbone-containing soluble concentrate | |
| | | 1,000-fold dilution | 100-fold dilution | | 1,000-fold dilution | 100-fold dilution |
| Head grains (%) | | 63.9 | 63.8 | 59.8 | 107 | 107 |
| Damaged kernels (%) | | 2.2 | 2.0 | 2.5 | 88 | 80 |
| Dead kernels (%) | | 0.7 | 0.9 | 1.6 | 44 | 56 |
| Colored kernels (%) | | 0.1 | 0.2 | 0.4 | 25 | 50 |
| Immature grains (%) | | 33.1 | 33.0 | 35.6 | 93 | 93 |
| Details of immature grain | Milky white kernels (%) | 7.1 | 5.8 | 9.2 | 77 | 63 |
| | White-based kernels (%) | 7.4 | 7.4 | 8.8 | 84 | 84 |
| | White-belly kernels (%) | 1.1 | 0.9 | 1.4 | 79 | 64 |
| | Green immature grains (%) | 1.3 | 0.8 | 0.9 | 144 | 89 |
| | Other immature grains (%) | 16.3 | 18.2 | 15.3 | 107 | 119 |
| Grain chalkiness (%) | | 15.6 | 14.1 | 19.4 | 80 | 73 |

| | | | | | | |
|---|---|---|---|---|---|---|
| grain chalkiness: milky white kernels +white-based kernels+white-belly kernels | | | | | | |

As evident from Tables 4 and 5, in the case of applying the solution of the zerumbone-containing soluble concentrate diluted with water for water application in the rice plants reproductive stage (the booting stage and the heading stage after the transplanting), an effect to increase the proportion of head grain is confirmed as compared with the untreated plot, and an effect to suppress deterioration in quality of brown rice is confirmed. In Test Example 2 also, it is confirmed that the proportion of grain chalkiness is reduced as compared with the untreated plot, and the proportions of damaged kernels other than the grain chalkiness, dead kernels and the like are also reduced as compared with the untreated plot, thus contributing to the increase of the proportion of head grain.

### Test Example 3

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, paddy rice seeds (variety: Kinuhikari) were sown and grown conventionally, and seedlings were mechanically transplanted into a paddy field. In the panicle initiation stage (55 days after the transplanting), an aqueous solution having the zerumbone-containing soluble concentrate diluted 100-fold, 500-fold, 1000-fold or 2000-fold with water in an amount corresponding to 100 L per 10 are, was applied by a pipette in water.

After the harvest, grain threshing, hulling and grade inspection by a rice grader were carried out, and the brown rice quality of the obtained polished brown rice was determined by grain discriminator (tradename: RGQI 20A) manufactured by SATAKE CORPORATION to calculate the proportion of the number of grains of each discrimination item (head grain, damaged kernel, etc.) per 1000 grains of the polished brown rice. The results are shown in Table 6.

In this Test, the average temperature in the ripening period for 20 days after heading was such that the highest temperature (average daily highest temperature for 20 days): 35.2°C, the lowest temperature (average daily lowest temperature for 20 days): 25.1°C and the average temperature (average daily mean temperature for 20 days): 29.1°C, and such was a condition under which high-temperature damage in the ripening period might occur.

**Table 6**

| | | Measured Value | | | | |
|---|---|---|---|---|---|---|
| | | Zerumbone-containing soluble concentrate | | | | Untreated plot |
| | | 100-Fold | 500-Fold | 1,000-Fold | 2,000-Fold | |
| Head grains (%) | | 34.1 | 33.1 | 34.1 | 32.6 | 27.7 |
| Damaged kernels (%) | | 13.4 | 12.9 | 12.7 | 14.2 | 13.9 |
| Dead kernels (%) | | 1.5 | 1.4 | 1.3 | 1.5 | 1.9 |
| Colored kernels (%) | | 0.1 | 0.1 | 0.1 | 0.1 | 0.1 |
| Immature grains (%) | | 50.8 | 52.5 | 51.8 | 51.6 | 56.3 |
| Details of immature grain | Milky white kernels (%) | 10.1 | 10.9 | 10.0 | 9.9 | 11.9 |
| | White-based kernels (%) | 17.3 | 15.8 | 18.0 | 17.8 | 19.5 |
| | White-belly kernels (%) | 4.4 | 5.1 | 4.2 | 4.7 | 5.9 |
| | Green immature grains (%) | 0.5 | 0.8 | 0.5 | 0.2 | 0.2 |
| | Other immature grains (%) | 18.5 | 20.0 | 19.1 | 19.0 | 18.8 |
| Grain chalkiness (%) | | 31.8 | 31.8 | 32.2 | 32.4 | 37.3 |

| | | | | | | |
|---|---|---|---|---|---|---|
| grain chalkiness: milky white kernels +white-based kernels+white-belly kernels | | | | | | |

**Table 6 (continued)**

| | | Relative to untreated plot (%) | | | |
|---|---|---|---|---|---|
| | | Zerumbone-containing soluble concentrate | | | |
| | | 100-Fold | 500-Fold | 1,000-Fold | 2,000-Fold |
| Head grains (%) | | 123 | 119 | 123 | 118 |
| Damaged kernels (%) | | 96 | 93 | 91 | 102 |
| Dead kernels (%) | | 79 | 74 | 68 | 79 |
| Colored kernels (%) | | 100 | 100 | 100 | 100 |
| Immature grains (%) | | 90 | 93 | 92 | 92 |
| Details of immature grain | Milky white kernels (%) | 85 | 92 | 84 | 83 |
| | White-based kernels (%) | 89 | 81 | 92 | 91 |
| | White-belly kernels (%) | 75 | 86 | 71 | 80 |
| | Green immature grains (%) | 250 | 400 | 250 | 100 |
| | Other immature grains (%) | 98 | 106 | 102 | 101 |
| Grain chalkiness (%) | | 85 | 85 | 86 | 87 |

| | | | | | |
|---|---|---|---|---|---|
| grain chalkiness: milky white kernels +white-based kernels+white-belly kernels | | | | | |

As evident from Table 6, an effect to increase the proportion of head grain by the zerumbone-containing soluble concentrate is confirmed regardless of the dilution concentration as compared with the untreated plot, and an effect to suppress deterioration in quality of brown rice is confirmed. In Test Example 3 also, it is confirmed that the proportion of grain chalkiness is reduced as compared with the untreated plot, and the proportions of damaged kernel other than the grain chalkiness, dead kernel and the like are also reduced as compared with the untreated plot, thus contributing to the increase of the proportion of head grain.

### Test Example 4

A nursery box was filled with nursery soil, paddy rice seeds (variety: Kinuhikari) were sown and grown conventionally, and seedlings were mechanically transplanted into a paddy field. In the panicle initiation stage (55 days after the transplanting, 23 days before heading), an aqueous solution having a zerumbone-containing wild ginger ground product (mixed with dextrin for concentration adjustment to a zerumbone content of 0.01 wt%) diluted 500-fold or 1000-fold with water in an amount corresponding to 100 L per 10 are, was applied by a pipette in water.

After the harvest, grain threshing, hulling and grade inspection by a rice grader were carried out, and the brown rice quality of the obtained polished brown rice was determined by grain discriminator (tradename: RGQI 20A) manufactured by SATAKE CORPORATION to calculate the proportion of the number of grains of each discrimination item (head grain, damaged kernel, etc.) per 1000 grains of the polished brown rice. The results are shown in Table 7.

In this Test, the average temperature in the ripening period for 20 days after heading was such that the highest temperature (average daily highest temperature for 20 days): 35.2°C, the lowest temperature (average daily lowest temperature for 20 days): 25.1°C and the average temperature (average daily mean temperature for 20 days): 29.1°C, and such was a condition under which high-temperature damage in the ripening period might occur.

**Table 7**

| | | Measured Value | | | Relative to untreated plot (%) | |
|---|---|---|---|---|---|---|
| | | Zerumbone-containing wild ginger ground product | | Untreated plot | Zerumbone-containing wild ginger ground product | |
| | | 500-Fold | 1,000-Fold | | 500-Fold | 1,000-Fold |
| Head grains (%) | | 39.6 | 36.9 | 27.7 | 143 | 133 |
| Damaged kernels (%) | | 12.7 | 13.5 | 13.9 | 91 | 97 |
| Dead kernels (%) | | 1.0 | 1.2 | 1.9 | 53 | 63 |
| Colored kernels (%) | | 0.1 | 0.1 | 0.1 | 100 | 100 |
| Immature grains (%) | | 46.6 | 48.3 | 56.3 | 83 | 86 |
| Details of immature grain | Milky white kernels (%) | 8.3 | 8.6 | 11.9 | 70 | 72 |
| | White-based kernels (%) | 14.4 | 14.8 | 19.5 | 74 | 76 |
| | White-belly kernels (%) | 3.9 | 3.9 | 5.9 | 66 | 66 |
| | Green immature grains (%) | 0.6 | 0.6 | 0.2 | 300 | 300 |
| | Other immature grains (%) | 19.5 | 20.4 | 18.8 | 104 | 109 |
| Grain chalkiness (%) | | 26.6 | 27.3 | 37.3 | 71 | 73 |

| | | | | | | |
|---|---|---|---|---|---|---|
| grain chalkiness: milky white kernels +white-based kernels+white-belly kernels | | | | | | |

As evident from Table 7, an effect to increase the proportion of head grain by the zerumbone-containing wild ginger ground product is confirmed regardless of the dilution concentration as compared with the untreated plot, and an effect to suppress deterioration in quality of brown rice is confirmed. In Test Example 4 also, it is confirmed that the proportion of grain chalkiness is reduced as compared with the untreated plot, and the proportions of damaged kernel other than the grain chalkiness, dead kernel and the like are also reduced as compared with the untreated plot, thus contributing to the increase of the proportion of head grain.

### Test Example 5

1 part by weight of a zerumbone-containing wild ginger ground product (mixed with dextrin for concentration adjustment to a zerumbone content of 1 wt%), 5 parts by weight of sodium tripolyphosphate, 3 parts by weight of sodium carboxymethylcellulose, 30 parts by weight of bentonite, 1 part by weight of a salt of dialkylsulfosuccinate ester, 2 parts by weight of a polycarboxylic acid type anionic surfactant and 58 parts by weight of calcium carbonate were uniformly mixed. To the powder mixture, an appropriate amount of water was added and kneaded. The obtained kneaded product was granulated by extrusion by a basket extrusion-granulator and dried to obtain zerumbone-containing granules.

A nursery box was filled with nursery soil, paddy rice seeds (variety: Kinuhikari) were sown and grown conventionally, and seedlings were mechanically transplanted into a paddy field. In the panicle initiation stage (51 days after the transplanting, 20 days before heading) or in the booting stage (63 days after the transplanting, 8 days before heading), the above prepared zerumbone-containing granules were manually applied in water (dose: 1 kg/10 are).

After the harvest, grain threshing, hulling and grade inspection by a rice grader were carried out, and the brown rice quality of the obtained polished brown rice was determined by grain discriminator (tradename: RGQI 20A) manufactured by SATAKE CORPORATION to calculate the proportion of the number of grains of each discrimination item (head grain, damaged kernel, etc.) per 1000 grains of the polished brown rice. The results are shown in Table 8.

In this Test, the average temperature in the ripening period for 20 days after heading was such that the highest temperature (average daily highest temperature for 20 days): 29.8°C, the lowest temperature (average daily lowest temperature for 20 days): 23.2°C and the average temperature (average daily mean temperature for 20 days): 25.9°C.

**Table 8**

| | | Measured Value | | | Relative to untreated plot (%) | |
|---|---|---|---|---|---|---|
| | | Timing of application of zerumbone-containing granules | | Untreated plot | Timing of application of zerumbone-containing granules | |
| | | Panicle initiation stage | Booting stage | | Panicle initiation stage | Booting stage |
| Head grains (%) | | 85.4 | 85.8 | 81.4 | 105 | 105 |
| Damaged kernels (%) | | 0.5 | 0.6 | 1.1 | 45 | 55 |
| Dead kernels (%) | | 0.4 | 0.4 | 0.5 | 80 | 80 |
| Colored kernels (%) | | 0.1 | 0.1 | 0.1 | 100 | 100 |
| Immature grains (%) | | 13.6 | 13.0 | 16.9 | 80 | 77 |
| Details of immature grain | Milky white kernels (%) | 1.9 | 2.1 | 2.4 | 79 | 88 |
| | White-based kernels (%) | 0.7 | 0.7 | 1.0 | 70 | 70 |
| | White-belly kernels (%) | 0.2 | 0.3 | 0.4 | 50 | 75 |
| | Green immature grains (%) | 4.8 | 4.0 | 4.2 | 114 | 95 |
| | Other immature grains (%) | 5.9 | 6.0 | 8.9 | 66 | 67 |
| Grain chalkiness (%) | | 2.8 | 3.1 | 3.8 | 74 | 82 |

| | | | | | | |
|---|---|---|---|---|---|---|
| grain chalkiness: milky white kernels +white-based kernels+white-belly kernels | | | | | | |

The temperature in the ripening period for 20 days after heading in this Test is not considered to be conditions under which high-temperature damage in the ripening period is likely to occur, however, a quality improving effect as compared with the untreated plot can be confirmed. Specifically, as evident from Table 8, an effect to increase the proportion of head grain by the zerumbone-containing granules is confirmed, and an effect to suppress deterioration in quality of brown rice is confirmed. In Test Example 5 also, it is confirmed that the proportion of grain chalkiness is reduced as compared with the untreated plot, and the proportions of damaged kernel other than the grain chalkiness, dead kernel and the like are also reduced as compared with the untreated plot, thus contributing to the increase of the proportion of head grain.

### Test Example 6

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, and paddy rice seeds (variety: Kinuhikari) were sown. It was grown in conventional cultivation, and seven days or three days before transplanting or on the day before transplanting, a solution of the zerumbone-containing soluble concentrate diluted with water to a predetermined concentration was sprayed with a pressure sprayer in an amount of 500 mL per nursery box for foliar application. Further, for comparison, using water containing no active ingredient, it was grown in the same cultivation method (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion of the number of grains of each discrimination item (head grain, damaged kernel, etc.) per 1000 grains of the polished brown rice. The results are shown in Tables 9 to 11.

In this Test, the average temperature in the ripening period for 20 days after heading was such that the highest temperature (average daily highest temperature for 20 days): 33.5°C, the lowest temperature (average daily lowest temperature for 20 days): 24.9°C and the average temperature (average daily mean temperature for 20 days): 28.4°C, and such was a condition under which high-temperature damage in the ripening period might occur.

**Table 9**

| 7 Days before transplanting | | | | | | |
|---|---|---|---|---|---|---|
| | | Measured Value | | | | |
| | | Zerumbone-containing soluble concentrate | | | | Untreated plot |
| | | 100-Fold | 250-Fold | 500-Fold | 1,000-Fold | |
| Head grains (%) | | 70.1 | 70.8 | 71.4 | 70.2 | 60.6 |
| Damaged kernels (%) | | 0.9 | 0.9 | 1.0 | 0.9 | 3.6 |
| Dead kernels (%) | | 0.4 | 0.3 | 0.2 | 0.2 | 0.4 |
| Colored kernels (%) | | 0.5 | 0.4 | 0.4 | 0.3 | 0.3 |
| Immature grains (%) | | 28.1 | 31.7 | 27.0 | 28.4 | 35.1 |
| Details of immature grain | Milky white kernels (%) | 1.9 | 1.4 | 1.6 | 1.4 | 1.9 |
| | White-based kernels (%) | 3.3 | 2.5 | 2.1 | 2.5 | 3.4 |
| | White-belly kernels (%) | 2.2 | 1.5 | 1.5 | 1.6 | 2.0 |
| | Green immature grains (%) | 1.1 | 2.1 | 2.0 | 1.7 | 1.4 |
| | Other immature grains (%) | 19.6 | 24.2 | 19.9 | 21.2 | 26.4 |
| Grain chalkiness (%) | | 7.4 | 5.4 | 5.1 | 5.5 | 7.2 |

| | | | | | | |
|---|---|---|---|---|---|---|
| grain chalkiness: milky white kernels +white-based kernels+white-belly kernels | | | | | | |

**Table 9 (continued)**

| | | Relative to untreated plot (%) | | | |
|---|---|---|---|---|---|
| | | Zerumbone-containing soluble concentrate | | | |
| | | 100-Fold | 250-Fold | 500-Fold | 1,000-Fold |
| Head grains (%) | | 116 | 117 | 118 | 116 |
| Damaged kernels (%) | | 25 | 25 | 28 | 25 |
| Dead kernels (%) | | 100 | 75 | 50 | 50 |
| Colored kernels (%) | | 167 | 133 | 133 | 100 |
| Immature grains (%) | | 80 | 90 | 77 | 81 |
| Details of immature grain | Milky white kernels (%) | 100 | 74 | 84 | 74 |
| | White-based kernels (%) | 97 | 74 | 62 | 74 |
| | White-belly kernels (%) | 110 | 75 | 75 | 80 |
| | Green immature grains (%) | 79 | 150 | 143 | 121 |
| | Other immature grains (%) | 74 | 92 | 75 | 80 |
| Grain chalkiness (%) | | 103 | 75 | 71 | 76 |

| | | | | | |
|---|---|---|---|---|---|
| grain chalkiness: milky white kernels +white-based kernels+white-belly kernels | | | | | |

**Table 10**

| 3 Days before transplanting | | | | | | |
|---|---|---|---|---|---|---|
| | | Measured Value | | | | |
| | | Zerumbone-containing soluble concentrate | | | | Untreated plot |
| | | 100-Fold | 250-Fold | 500-Fold | 1,000-Fold | |
| Head grains (%) | | 71.3 | 72.9 | 69.5 | 71.1 | 60.6 |
| Damaged kernels (%) | | 1.0 | 1.1 | 0.9 | 1.0 | 3.6 |
| Dead kernels (%) | | 0.2 | 0.3 | 0.6 | 0.3 | 0.4 |
| Colored kernels (%) | | 0.2 | 0.4 | 0.2 | 0.2 | 0.3 |
| Immature grains (%) | | 27.3 | 24.8 | 28.8 | 27.4 | 35.1 |
| Details of immature grain | Milky white kernels (%) | 1.4 | 1.4 | 1.7 | 1.2 | 1.9 |
| | White-based kernels (%) | 3.0 | 3.1 | 3.9 | 3.1 | 3.4 |
| | White-belly kernels (%) | 1.5 | 1.6 | 2.1 | 1.7 | 2.0 |
| | Green immature grains (%) | 0.9 | 1.0 | 1.0 | 1.2 | 1.4 |
| | Other immature grains (%) | 20.5 | 17.8 | 20.0 | 20.2 | 26.4 |
| Grain chalkiness (%) | | 5.9 | 6.1 | 7.8 | 6.0 | 7.2 |

| | | | | | | |
|---|---|---|---|---|---|---|
| grain chalkiness: milky white kernels +white-based kernels+white-belly kernels | | | | | | |

**Table 10 (continued)**

| | | Relative to untreated plot (%) | | | |
|---|---|---|---|---|---|
| | | Zerumbone-containing soluble concentrate | | | |
| | | 100-Fold | 250-Fold | 500-Fold | 1,000-Fold |
| Head grains (%) | | 118 | 120 | 115 | 117 |
| Damaged kernels (%) | | 28 | 31 | 25 | 28 |
| Dead kernels (%) | | 50 | 75 | 150 | 75 |
| Colored kernels (%) | | 67 | 133 | 67 | 67 |
| Immature grains (%) | | 78 | 71 | 82 | 78 |
| Details of immature grain | Milky white kernels (%) | 74 | 74 | 89 | 63 |
| | White-based kernels (%) | 88 | 91 | 115 | 91 |
| | White-belly kernels (%) | 75 | 80 | 105 | 85 |
| | Green immature grains (%) | 64 | 71 | 71 | 86 |
| | Other immature grains (%) | 78 | 67 | 76 | 77 |
| Grain chalkiness (%) | | 82 | 85 | 108 | 83 |

| | | | | | |
|---|---|---|---|---|---|
| grain chalkiness: milky white kernels +white-based kernels+white-belly kernels | | | | | |

**Table 11**

| The day before transplanting | | | | | |
|---|---|---|---|---|---|
| | | Measured Value | | | |
| | | Zerumbone-containing soluble concentrate | | | Untreated plot |
| | | 100-Fold | 250-Fold | 500-Fold | |
| Head grains (%) | | 66.5 | 67.8 | 67.0 | 60.6 |
| Damaged kernels (%) | | 4.5 | 3.5 | 3.8 | 3.6 |
| Dead kernels (%) | | 0.2 | 0.4 | 0.3 | 0.4 |
| Colored kernels (%) | | 0.2 | 0.2 | 0.3 | 0.3 |
| Immature grains (%) | | 28.6 | 28.2 | 28.7 | 35.1 |
| Details of immature grain | Milky white kernels (%) | 1.7 | 2.1 | 1.4 | 1.9 |
| | White-based kernels (%) | 2.3 | 1.8 | 3.2 | 3.4 |
| | White-belly kernels (%) | 1.5 | 1.3 | 1.6 | 2.0 |
| | Green immature grains (%) | 1.3 | 2.1 | 0.9 | 1.4 |
| | Other immature grains (%) | 21.8 | 21.0 | 21.6 | 26.4 |
| Grain chalkiness (%) | | 5.5 | 5.2 | 6.2 | 7.2 |

| | | | | | |
|---|---|---|---|---|---|
| grain chalkiness: milky white kernels +white-based kernels+white-belly kernels | | | | | |

**Table 11 (continued)**

| | | Relative to untreated plot (%) | | |
|---|---|---|---|---|
| | | Zerumbone-containing soluble concentrate | | |
| | | 100-Fold | 250-Fold | 500-Fold |
| Head grains (%) | | 110 | 112 | 111 |
| Damaged kernels (%) | | 125 | 97 | 106 |
| Dead kernels (%) | | 50 | 100 | 75 |
| Colored kernels (%) | | 67 | 67 | 100 |
| Immature grains (%) | | 81 | 80 | 82 |
| Details of immature grain | Milky white kernels (%) | 89 | 111 | 74 |
| | White-based kernels (%) | 68 | 53 | 94 |
| | White-belly kernels (%) | 75 | 68 | 80 |
| | Green immature grains (%) | 93 | 150 | 64 |
| | Other immature grains (%) | 83 | 80 | 82 |
| Grain chalkiness (%) | | 76 | 72 | 86 |

| | | | | |
|---|---|---|---|---|
| grain chalkiness: milky white kernels +white-based kernels+white-belly kernels | | | | |

From the results shown in Tables 9 to 11, an effect to increase the proportion of head grain by the zerumbone-containing soluble concentrate, at any application timing of 7 days before transplanting, 3 days before transplanting and the day before transplanting, is confirmed regardless of the dilution concentration, as compared with the untreated plot, and an effect to suppress deterioration in quality of brown rice is confirmed. The proportion of immature grain (mainly grain chalkiness) is reduced as compared with the untreated plot, and the proportions of damaged kernel, dead kernel, etc. show tendency to reduce, and thus, an increase of the proportion of head grain is confirmed.

### Test Example 7

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, and paddy rice seeds (variety: Kinuhikari) were sown and grown conventionally. After completion of greening, at a point when the 1 leaf stage was completed and the 2 leaf stage started, the nursery soil was irrigated with a solution of the zerumbone-containing soluble concentrate diluted with water to a predetermined concentration to a depth of about 1 to 2 cm from the upper edge of the nursery box. Further, for comparison, using water containing no active ingredient, it was grown in the same cultivation method (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion. The results are shown in Table 12.

In this Test, the average temperature in the ripening period for 20 days after heading was such that the highest temperature (average daily highest temperature for 20 days): 33.5°C, the lowest temperature (average daily lowest temperature for 20 days): 24.9°C and the average temperature (average daily mean temperature for 20 days): 28.4°C, and such was a condition under which high-temperature damage in the ripening period might occur.

**Table 12**

| | | Measured Value | | | | Relative to untreated plot (%) | | |
|---|---|---|---|---|---|---|---|---|
| | | Zerumbone-containing soluble concentrate | | | Untreated plot | Zerumbone-containing soluble concentrate | | |
| | | 500-Fold | 1,000-Fold | 2,000-Fold | | 500-Fold | 1,000-Fold | 2,000-Fold |
| Head grains (%) | | 69.3 | 74.7 | 73.3 | 60.6 | 114 | 123 | 121 |
| Damaged kernels (%) | | 0.8 | 0.8 | 0.8 | 3.6 | 22 | 22 | 22 |
| Dead kernels (%) | | 0.2 | 0.2 | 0.1 | 0.4 | 50 | 50 | 25 |
| Colored kernels (%) | | 0.3 | 0.3 | 0.3 | 0.3 | 100 | 100 | 100 |
| Immature grains (%) | | 29.4 | 24.1 | 25.5 | 35.1 | 84 | 69 | 73 |
| Details of immature grain | Milky white kernels (%) | 1.8 | 1.7 | 1.6 | 1.9 | 95 | 89 | 84 |
| | White-based kernels (%) | 4.3 | 3.0 | 2.7 | 3.4 | 126 | 88 | 79 |
| | White-belly kernels (%) | 2.1 | 1.8 | 1.7 | 2.0 | 105 | 90 | 85 |
| | Green immature grains (%) | 1.0 | 1.7 | 1.8 | 1.4 | 71 | 121 | 129 |
| | Other immature grains (%) | 20.1 | 15.9 | 17.7 | 26.4 | 76 | 60 | 67 |
| Grain chalkiness (%) | | 8.3 | 6.5 | 6.0 | 7.2 | 115 | 90 | 83 |

| | | | | | | | | |
|---|---|---|---|---|---|---|---|---|
| grain chalkiness: milky white kernels +white-based kernels+white-belly kernels | | | | | | | | |

From the results shown in Table 12, an effect to increase the proportion of head grain by pool raising seedling using the zerumbone-containing soluble concentrate is confirmed as compared with the untreated plot, and an effect to suppress deterioration in quality of brown rice is confirmed. The proportion of immature grain (mainly grain chalkiness) is reduced as compared with the untreated plot, and the proportions of damaged kernel, dead kernel, etc. show tendency to reduce, and thus, an increase of the proportion of head grain is confirmed.

### Test Example 8

An extract of wild ginger rhizome with ethanol was adjusted with water and ethanol into a 50 wt% aqueous ethanol solution having a zerumbone concentration of 1000 ppm to prepare a zerumbone-containing soluble concentrate.

A nursery box was filled with nursery soil, and paddy rice seeds (variety: Kinuhikari) were sown. It was grown in conventional cultivation, and seven days or three days before transplanting or on the day before transplanting, the nursery soil was soaked in a solution of the zerumbone-containing soluble concentrate diluted 500-fold with water to a depth of about 1 to 2 cm from the upper edge of the nursery box. After 24 hours for soaking, the nursery box was drained, and the seedlings were grown conventionally. Further, for comparison, using water containing no active ingredient, it was grown in the same manner (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion of the number of grains of each discrimination item (head grain, damaged kernel, etc.) per 1000 grains of the polished brown rice. The results are shown in Table 13.

In this Test, the average temperature in the ripening period for 20 days after heading was such that the highest temperature (average daily highest temperature for 20 days): 33.5°C, the lowest temperature (average daily lowest temperature for 20 days): 24.9°C and the average temperature (average daily mean temperature for 20 days): 28.4°C, and such was a condition under which high-temperature damage in the ripening period might occur.

**38**

**Table 13**

| | | Measured Value | | | | Relative to untreated plot (%) | | |
|---|---|---|---|---|---|---|---|---|
| | | Timing of soaking in zerumbone-containing soluble concentrate | | | Untreated plot | Timing of soaking in zerumbone-containing soluble concentrate | | |
| | | 7 Days before transplanting | 3 Days before transplanting | Day before transplanting | | 7 Days before transplanting | 3 Days before transplanting | Day before transplanting |
| Head grains (%) | | 74.4 | 74.4 | 73.3 | 60.6 | 123 | 123 | 121 |
| Damaged kernels (%) | | 0.7 | 0.6 | 0.8 | 3.6 | 19 | 17 | 22 |
| Dead kernels (%) | | 0.2 | 0.2 | 0.1 | 0.4 | 50 | 50 | 25 |
| Colored kernels (%) | | 0.2 | 0.3 | 0.3 | 0.3 | 67 | 100 | 100 |
| Immature grains (%) | | 24.4 | 24.6 | 25.5 | 35.1 | 70 | 70 | 73 |
| Details of immature grain | Milky white kernels (%) | 1.6 | 1.3 | 1.6 | 1.9 | 84 | 68 | 84 |
| | White-based kernels (%) | 2.1 | 2.8 | 2.7 | 3.4 | 62 | 82 | 79 |
| | White-belly kernels (%) | 1.1 | 1.5 | 1.7 | 2.0 | 55 | 75 | 85 |
| | Green immature grains (%) | 1.9 | 1.5 | 1.8 | 1.4 | 136 | 107 | 129 |
| | Other immature grains (%) | 17.7 | 17.4 | 17.7 | 26.4 | 67 | 66 | 67 |
| Grain chalkiness (%) | | 4.8 | 5.6 | 6.0 | 7.2 | 67 | 78 | 83 |

| | | | | | | | | |
|---|---|---|---|---|---|---|---|---|
| grain chalkiness: milky white kernels +white-based kernels+white-belly kernels | | | | | | | | |

From the results shown in Table 13, an effect to increase the proportion of head grain by soaking application using the zerumbone-containing soluble concentrate is confirmed as compared with the untreated plot, and an effect to suppress deterioration in quality of brown rice is confirmed. The proportion of immature grain (mainly grain chalkiness) is reduced as compared with the untreated plot, and the proportions of damaged kernel, dead kernel, etc. show tendency to reduce, and thus, an increase of the proportion of head grain is confirmed.

### Test Example 9

An extract of wild ginger rhizome with ethanol was adjusted with water and ethanol into a 50 wt% aqueous ethanol solution having a zerumbone concentration of 1000 ppm to prepare a zerumbone-containing soluble concentrate.

1 L of a solution of the zerumbone-containing soluble concentrate diluted 500-fold with water was prepared, and 500 g as the weight of dry unhulled rice of paddy rice seeds (variety: Kinuhikari) were soaked in the solution only for 24 hours before sowing, and then sown on nursery soil in a nursery box. Further, for comparison, using water containing no active ingredient, seeds were soaked and grown in the same manner (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion of the number of grains of each discrimination item (head grain, damaged kernel, etc.) per 1000 grains of the polished brown rice. The results are shown in Table 14.

In this Test, the average temperature in the ripening period for 20 days after heading was such that the highest temperature (average daily highest temperature for 20 days): 33.5°C, the lowest temperature (average daily lowest temperature for 20 days): 24.9°C and the average temperature (average daily mean temperature for 20 days): 28.4°C, and such was a condition under which high-temperature damage in the ripening period might occur.

**Table 14**

| | | Measured Value | | Relative to untreated plot (%) |
|---|---|---|---|---|
| | | Zerumbone-containing soluble concentrate (500-Fold) | Untreated plot | Zerumbone-containing soluble concentrate |
| Head grains (%) | | 74.9 | 60.6 | 124 |
| Damaged kernels (%) | | 0.6 | 3.6 | 17 |
| Dead kernels (%) | | 0.2 | 0.4 | 50 |
| Colored kernels (%) | | 0.2 | 0.3 | 67 |
| Immature grains (%) | | 24.1 | 35.1 | 69 |
| Details of immature grain | Milky white kernels (%) | 1.7 | 1.9 | 89 |
| | White-based kernels (%) | 1.2 | 3.4 | 35 |
| | White-belly kernels (%) | 1.0 | 2.0 | 50 |
| | Green immature grains (%) | 3.2 | 1.4 | 229 |
| | Other immature grains (%) | 17.0 | 26.4 | 64 |
| Grain chalkiness (%) | | 3.9 | 7.2 | 54 |

| | | | | |
|---|---|---|---|---|
| grain chalkiness: milky white kernels +white-based kernels+white-belly kernels | | | | |

From the results shown in Table 14, an effect to increase the proportion of head grain by seed treatment using the zerumbone-containing soluble concentrate is confirmed as compared with the untreated plot, and an effect to suppress deterioration in quality of brown rice is confirmed. The proportion of immature grain (grain chalkiness) is reduced as compared with the untreated plot, and the proportions of damaged kernel, dead kernel, etc. show tendency to reduce, and thus, an increase of the proportion of head grain is confirmed.

### Test Example 10

1 part by weight of a zerumbone-containing wild ginger ground product (mixed with dextrin for concentration adjustment to a zerumbone content of 1 wt%), 5 parts by weight of sodium tripolyphosphate, 3 parts by weight of sodium carboxymethylcellulose, 30 parts by weight of bentonite, 1 part by weight of a salt of dialkylsulfosuccinate ester, 2 parts by weight of a polycarboxylic acid type anionic surfactant and 58 parts by weight of calcium carbonate were uniformly mixed. To the powder mixture, an appropriate amount of water was added and kneaded. The obtained kneaded product was granulated by extrusion by a basket extrusion-granulator and dried to obtain zerumbone-containing granules.

A nursery box was filled with nursery soil, and paddy rice seeds (variety:
Kinuhikari) were sown and grown conventionally. After completion of greening, at a point when the 1 leaf stage was completed and the 2 leaf stage started, the nursery soil was irrigated with water to a depth of about 1 to 2 cm from the upper edge of the nursery box, and the zerumbone-containing granules were manually applied in an amount of 50 g or 10 g per nursery box. Further, for comparison, using water containing no active ingredient, it was grown in the same manner (untreated plot). The seedlings were mechanically transplanted into a paddy field and grown conventionally to the harvest.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion of the number of grains of each discrimination item (head grain, damaged kernel, etc.) per 1000 grains of the polished brown rice. The results are shown in Table 15.

In this Test, the average temperature in the ripening period for 20 days after heading was such that the highest temperature (average daily highest temperature for 20 days): 33.5°C, the lowest temperature (average daily lowest temperature for 20 days): 24.9°C and the average temperature (average daily mean temperature for 20 days): 28.4°C, and such was a condition under which high-temperature damage in the ripening period might occur.

**Table 15**

| | | Measured Value | | | Relative to untreated plot (%) | |
|---|---|---|---|---|---|---|
| | | Zerumbone-containing granules | | Untreated plot | Zerumbone-containing granules | |
| | | 50g | 10g | | 50g | 10g |
| Head grains (%) | | 74.4 | 74.4 | 60.6 | 123 | 123 |
| Damaged kernels (%) | | 0.7 | 0.6 | 3.6 | 19 | 17 |
| Dead kernels (%) | | 0.2 | 0.2 | 0.4 | 50 | 50 |
| Colored kernels (%) | | 0.2 | 0.3 | 0.3 | 67 | 100 |
| Immature grains (%) | | 24.4 | 24.6 | 35.1 | 70 | 70 |
| Details of immature grain | Milky white kernels (%) | 1.6 | 1.3 | 1.9 | 84 | 68 |
| | White-based kernels (%) | 2.1 | 2.8 | 3.4 | 62 | 82 |
| | White-belly kernels (%) | 1.1 | 1.5 | 2.0 | 55 | 75 |
| | Green immature grains (%) | 1.9 | 1.5 | 1.4 | 136 | 107 |
| | Other immature grains (%) | 17.7 | 17.4 | 26.4 | 67 | 66 |
| Grain chalkiness (%) | | 4.8 | 5.6 | 7.2 | 67 | 78 |

| | | | | | | |
|---|---|---|---|---|---|---|
| grain chalkiness: milky white kernels +white-based kernels+white-belly kernels | | | | | | |

From the results shown in Table 15, an effect to increase the proportion of head grain by pool raising seedling using the zerumbone-containing granules is confirmed as compared with the untreated plot, and an effect to suppress deterioration in quality of brown rice is confirmed. The proportion of immature grain (mainly grain chalkiness) is reduced as compared with the untreated plot, and the proportions of damaged kernel, dead kernel, etc. show tendency to reduce, and thus, an increase of the proportion of head grain is confirmed.

### Test Example 11

1 part by weight of a zerumbone-containing wild ginger ground product (mixed with dextrin for concentration adjustment to a zerumbone content of 1 wt%), 5 parts by weight of sodium tripolyphosphate, 3 parts by weight of sodium carboxymethylcellulose, 30 parts by weight of bentonite, 1 part by weight of a salt of dialkylsulfosuccinate ester, 2 parts by weight of a polycarboxylic acid type anionic surfactant and 58 parts by weight of calcium carbonate were uniformly mixed. To the powder mixture, an appropriate amount of water was added and kneaded. The obtained kneaded product was granulated by extrusion by a basket extrusion-granulator and dried to obtain zerumbone-containing granules.

A nursery box was filled with nursery soil, paddy rice seeds (variety: Kinuhikari) were sown and grown conventionally, and seedlings were mechanically transplanted into a paddy field. In the booting stage (78 days after the transplanting, 11 days before heading), the above prepared zerumbone-containing granules were applied by a drone "AGRAS T10" (manufactured by DJI JAPAN) (dose: 1 kg/ are) in water. Application by the drone was conducted repeatedly for uniform application from an application height of about 2 m with an opening of application from 8 to 10%.

After the harvest, grain threshing, hulling and grade inspection by a rice grader were carried out, and the brown rice quality of the obtained polished brown rice was determined by grain discriminator (tradename: RGQI 100B) manufactured by SATAKE CORPORATION to calculate the proportion of the number of grains of each discrimination item (head grain, damaged kernel, etc.) per 1000 grains of the polished brown rice. The results are shown in Table 16. In this Test, the average temperature in the ripening period for 20 days after heading was such that the highest temperature (average daily highest temperature for 20 days): 31.9°C, the lowest temperature (average daily lowest temperature for 20 days): 23.2°C and the average temperature (average daily mean temperature for 20 days): 26.6°C.

**Table 16**

| | | Measured Value | | Relative to untreated plot (%) |
|---|---|---|---|---|
| | | Zerumbone-containing granules | Untreated plot | Zerumbone-containing granules |
| Head grains (%) | | 71.7 | 70.0 | 102 |
| Damaged kernels (%) | | 0.6 | 0.9 | 67 |
| Dead kernels (%) | | 0.2 | 0.7 | 29 |
| Colored kernels (%) | | 0.1 | 0.2 | 50 |
| Immature grains (%) | | 27.4 | 28.3 | 97 |
| Details of immature grain | Milky white kernels (%) | 1.1 | 1.8 | 61 |
| | White-based kernels (%) | 1.8 | 2.0 | 90 |
| | White-belly kernels (%) | 1.5 | 2.2 | 68 |
| | Green immature grains (%) | 5.3 | 3.3 | 161 |
| | Other immature grains (%) | 17.7 | 19.1 | 93 |
| Grain chalkiness (%) | | 4.4 | 5.9 | 75 |

| | | | | |
|---|---|---|---|---|
| grain chalkiness: milky white kernels +white-based kernels+white-belly kernels | | | | |

From the results shown in Table 16, an effect to increase the proportion of head grain by drone application using the zerumbone-containing granules is confirmed as compared with the untreated plot, and an effect to suppress deterioration in quality of brown rice is confirmed. The proportion of immature grain (mainly grain chalkiness) is reduced as compared with the untreated plot, and the proportions of damaged kernel, dead kernel, etc. show tendency to reduce, and thus, an increase of the proportion of head grain is confirmed.

Regarding the results in Table 16, superiority in an increase of the proportion of head grain to the untreated plot, is somewhat unclear. This is considered as follows. Since the average daily mean temperature for 20 days after heading was 26.6°C, the deterioration in quality in the untreated plot was not significant and thus no significant difference with the treated plot was made, and in addition, since the untreated plot could not be formed in the paddy filed for drone application, the untreated plot was formed in a separate paddy field from the treated plot, and a difference in the habitat between the treated plot and the untreated plot might be made.

### FORMULATION EXAMPLES

In order to clarify that the present invention is not limited to specific formulation type, formulation examples of various formulation types will be shown below. In the following, "%" represents "wt%", and "parts" represents "parts by weight".

### Formulation Example 1: soluble concentrate

Water is added to an extract of wild ginger with ethanol to obtain a soluble concentrate containing 0.1% of zerumbone.

### Formulation Example 2: emulsifiable concentrate

1 part of polyoxyethylene styrenated phenyl ether is added to 10 parts of an extract of wild ginger with an aromatic hydrocarbon solvent and uniformly mixed, and an aromatic hydrocarbon solvent containing 10% of polyoxyethylene styrenated phenyl ether is added to obtain an emulsifiable concentrate containing 0.1% of zerumbone.

### Formulation Example 3: suspoemulsion

1 part of polyoxyethylene styrenated phenyl ether and 0.2 parts of calcium alkylbenzenesulfonate are added to 10 parts of an extract of wild ginger with an aromatic hydrocarbon solvent and uniformly mixed, and a 10% aqueous propylene glycol solution is added and uniformly mixed to obtain a suspoemulsion containing 0.1% of zerumbone.

### Formulation Example 4: flowable

40 parts of a zerumbone-containing wild ginger ground product (zerumbone content: 1%), 1 part of sodium alkylnaphthalenesulfonate condensed with formaldehyde, 0.1 parts of emulsified polydimethylsiloxane, 0.05 parts of xanthan gum and 40 parts of water were wet ground to obtain a flowable.

### Formulation Example 5: wettable powder

50 parts of a zerumbone-containing wild ginger ground product (zerumbone content: 1%), 6 parts of sodium ligninsulfonate, 2 parts of an alkylbenzenesulfonate metal salt and 42 parts of clay are mixed to obtain a wettable powder.

### Formulation Example 6: Jumbo

2 parts of a zerumbone-containing wild ginger ground product (zerumbone content: 1%), 3 parts of a metal naphthalenesulfonate condensed with formaldehyde, 0.5 parts of sodium carboxymethylcellulose, 27 parts of starch, 5 parts of a salt of dialkylsulfosuccinate ester and 62.5 parts of hollow ceramic are mixed. An appropriate amount of water is added to the powder mixture and kneaded. The obtained kneaded product is granulated by extrusion by a basket extrusion-granulator and dried to obtain granules. The granules are put into a polyvinyl alcohol film bag to obtain Jumbo.

### Formulation Example 7: water dispersible granules

40 parts of a zerumbone-containing wild ginger ground product (zerumbone content: 1%), 16 parts of sodium ligninsulfonate, 4 parts of a salt of alkylnaphthalenesulfonate, 5 parts of bentonite and 35 parts of clay are weighted into millser (manufactured by Iwatani Corporation) and mixed, the powder mixture is put into a mortar, and an appropriate amount of water is added and kneaded. The obtained kneaded product is granulated by extrusion by a basket extrusion-granulator and dried to obtain water dispersible granules.

The entire disclosures of Japanese Patent Application No. 2022-130643 filed on August 18, 2022 and Japanese Patent Application No. 2022-199099 filed on December 14, 2022 including specifications, Claims and abstracts are incorporated herein by reference in their entireties.

## Claims

1. A brown rice quality improving agent comprising zerumbone as an active ingredient.

2. The brown rice quality improving agent according to Claim 1, which is a squeeze, an extract or a ground product of wild ginger containing zerumbone as an active ingredient, or which contains at least one of them.

3. The brown rice quality improving agent according to Claim 2, which is a squeeze or an extract of wild ginger containing zerumbone as an active ingredient, or which contains at least one of them.

4. The brown rice quality improving agent according to Claim 3, which is in the form of a soluble concentrate, an emulsifiable concentrate or a suspoemulsion.

5. The brown rice quality improving agent according to Claim 2, which is a ground product of wild ginger containing zerumbone as an active ingredient, or which contains the ground product.

6. The brown rice quality improving agent according to Claim 5, which is in the form of dust, granules, microgranules, a wettable powder, water dispersible granules, a flowable or diffusible granules.

7. A method for improving quality of brown rice, which has a step of applying zerumbone to rice plants in the cultivation period.

8. The method for improving quality of brown rice according to Claim 7, wherein at least one member selected from a squeeze, an extract and a ground product of wild ginger containing zerumbone as an active ingredient is applied to rice plants.

9. The method for improving quality of brown rice according to Claim 7 or 8, wherein zerumbone is applied to rice plants in the raising of seedling period.

10. The method for improving quality of brown rice according to Claim 9, wherein zerumbone is applied in a period from the beginning of the rice plants greening stage to the day of transplanting.

11. The method for improving quality of brown rice according to Claim 7 or 8, wherein zerumbone is applied to rice plants after transplanting.

12. The method for improving quality of brown rice according to Claim 7 or 8, wherein zerumbone is applied to seeds before sowing.
